Europäisches Patentamt

European Patent Office

Office européen des brevets

(11) Publication number: **0 040 888**
**B1**

# EUROPEAN PATENT SPECIFICATION

(45) Date of publication of patent specification: **10.04.85**

(51) Int. Cl.⁴: **G 01 F 23/26**

(21) Application number: **81200553.6**

(22) Date of filing: **21.05.81**

(54) Capacitive measuring device.

(30) Priority: **21.05.80 NL 8002951**

(43) Date of publication of application:
**02.12.81 Bulletin 81/48**

(45) Publication of the grant of the patent:
**10.04.85 Bulletin 85/15**

(84) Designated Contracting States:
**BE CH DE FR GB LI NL SE**

(56) References cited:
**BE-A- 511 252**
**DE-B-1 648 163**
**FR-A-2 405 469**
**NL-A-7 809 634**
**US-A-2 955 466**
**US-A-3 367 183**
**US-A-3 958 159**
**US-A-4 208 909**

**RESEARCH DISCLOSURE, no. 162, October
1977, page 18 Havant-Hampshire, G.B. E.S.
FRANCIS: "Dual element level measuring
probe"**

(73) Proprietor: **P. MAASKANT & ZONEN B.V.**
**P.O. Box 9**
**14, Havenkade NL-4310 AA Bruinisse (NL)**

(72) Inventor: **Stolk, Gerrit**
**19, Oudlandstraat**
**NL-4926 RC Lage Zwaluwe (NL)**
Inventor: **Maaskant, Pieter**
**20 Boomdijk**
**NL-4311 BM Bruinisse (NL)**

(74) Representative: **Hoorweg, Petrus Nicolaas**
**OCTROOIBUREAU ARNOLD & SIEDSMA**
**Sweelinckplein 1**
**NL-2517 GK The Hague (NL)**

(56) References cited:
**THE REVIEW OF SCIENTIFIC INSTRUMENTS,
vol. 25, no. 2, February 1954, pages 111-114
New York, U.S.A. W.E. WILLIAMS et al.: "Liquid
level indicator for condensed gases at low
temperatures"**

Courier Press, Leamington Spa, England.

# Description

The invention relates to a device for measuring the level of flowable substances, for example fluids, in a recipient (22), the device comprising a capacitive probe connected to an electric processing circuit and inserted into the recipient, said probe being intimately enveloped in an insulating synthetic resin coating and its top end being inserted into a bore of a housing to be connected with the recipient, an annular seal being formed by at least one annular filling body arranged between the bore and the coating of the probe.

A device as such is disclosed in US—A—3.958.159. The probe is formed by a pretensioned wire, said wire being coated by a synthetic resin. The wire does not permit a measurement which takes into consideration the properties and nature of different fluids which are poured into the recipient.

The invention has for its object to construct the probe so that apart from providing a very reliable measurement the probe permits of being used in recipients for any kind of substance, that is to say, chemically aggressive substances, explosive and poisonous substances.

The device according to the invention is characterized in that said probe consists of an upper and lower relatively measuring pipe sections, both being enveloped by said insulating coating, and in that resilient pressing means are provided near the top end of said upper pipe section to impose an axial load on the or each annular body.

The accuracy of the measurement is improved by using said probe consisting of two relatively insulated measuring pipe sections. One pipe section serves to fix a reference value regarding the properties and nature of the fluid, whereas the other section concerns the measurement of the level of admission in the recipient. Thanks to this devision of the probe it is possible to use the device universally, since the disturbing influence of the changing properties of the filling substance is automatically levelled out.

In order to render the probe resistant to the attack of the flowing substance, the two pipe parts of the probe are covered by an insulating synthetic resin coating, preferably of TEFLON (registered trade mark). Such a coating tends to creep downwards along the pipe sections what may lead to exposing said pipe sections to the agressive substance. Owing to the pressing means the coating will be held firmly by said annular body around the top end of said pipe section to avoid above mentioned creep-problem. Moreover hazards of leakage and explosion are avoided as well.

In BE—A—511.252 a measurement device comprising two registered sections not fully electrically insulated from each other is disclosed. The sections can be covered by a synthetic resin to protect the device against agressive substances.

The or each annular body preferably has a wedge-shaped longitudinal sectional area, its apex having an angle smaller than 30°. It is thus ensured that the Teflon® coating on the probe is firmly retained so that the probe remains free of leakage and corrosion respectively.

The invention will be described more fully in the following specification of the Figures illustrating two embodiments.

The drawing shows in

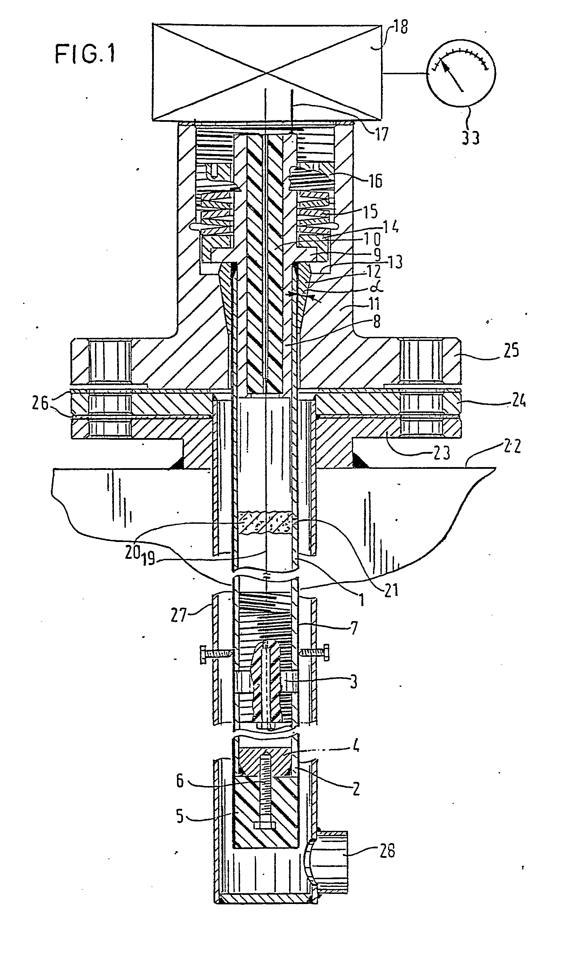

Fig. 1 a vertical sectional view of a first embodiment of the probe in accordance with the invention,

Fig. 2 a diagram of the electric processing circuitry and,

Fig. 3 a vertical sectional view like Fig. 1 of part of the probe in a second embodiment.

The probe illustrated in the Figures mainly comprises two pipe-shaped parts 1, 2 registering with one another. Between the pipe-shaped parts an insulating body 3 is fastened by a screw joint.

The lower side of the pipe-shaped part 2 is sealed by a plug 4 welded therein, to the lower side of which is tightly screwed a synthetic resin end stub 5 by means of a bolt 6. The synthetic resin stub 5 may be made from PTFE. To the overall length of the pipe-shaped parts 1 and 2 and of the end stub 5 is applied a synthetic resin coating 7, for example of PTFE.

On the top side the upper pipe part 1 is fastened to a sleeve 8, which is provided on the outer side with an annular shoulder 9. The bore of the sleeve 8 accommodates an insulating body 10 of synthetic resin.

The probe thus constructed is inserted from the top into the central bore of a housing 11 and an annular filling body 12 is disposed between a widened part of the bore of the housing and the probe. The filling body 12 has a wedge-shaped longitudinal sectional area, the apex of said wedge being smaller than 30°. The length of the annular body 12 is such that the body extends above a stop face 13 of the housing 11 so that the shoulder 9 bears on the filling body 12.

On the side of the shoulder 9 remote from the filling body 12 a guide ring 14 is arranged for supporting pressing means formed by a set of cup springs 15. These cup springs can be subjected to stress by a pressing nut 16 screwed into a screwthreaded part of the bore of the housing 11. It will be obvious that when the nut 16 is sufficiently tightened, the compression springs urge the filling body 12 downwards via the shoulder 9, said body exerting by its wedge-shaped structure a radially directed force on the coating 7 of the probe so that a leakage- and explosion-free seal is established between the probe and the housing. Moreover the wedge-shaped filling body 12 provides a firm retaining force so that the synthetic resin coating 7 remains in place and will not shift down due to creep, which may otherwise occur in the case of a Teflon® coating.

The envelope 8 is connected through a conductor 17 to the electric processing circuitry 18 arranged on top of the housing 11 so that there is established a direct electric connection to the upper pipe part 1 of the probe and the electric processing unit 18.

The lower pipe part 2 is connected through a conductor 19, which is directly inserted via a central bore into the insulator 3 and 10 respectively. The bores are such that the conductor 19 exactly passes through the centre of the pipe-shaped part 1. In the case of long probes centering means 20 may be provided at equal intervals, preferably in the form of foam material arranged via openings 21 in the upper pipe part 1 prior to the application of the synthetic resin coating 7.

To the wall of the vessel designated by the line 22 is welded a flange 23, on which have to be disposed a flange 24 and the flange 25 of the housing 11, said flanges being clamped together by means of bolts (not shown) with the interposition of sealing rings 26.

The intermediate flange 24 is welded to a pipe-shaped sheath portion 27, which surrounds the probe 1, 2 at a given distance. On the bottom side the interior of the sheath 27 communicates through the opening 28 with the space of the vessel 22.

The pipe-shaped sheath portion 27 constitutes, in fact, the mass for the capacity formed on the one hand by the pipe-shaped part 1 of the probe and the sheath 27, which section serves for measuring the level of admission and on the other hand between the pipe-shaped part 2 of the probe and the sheath 27, which section serves for the reference measurement.

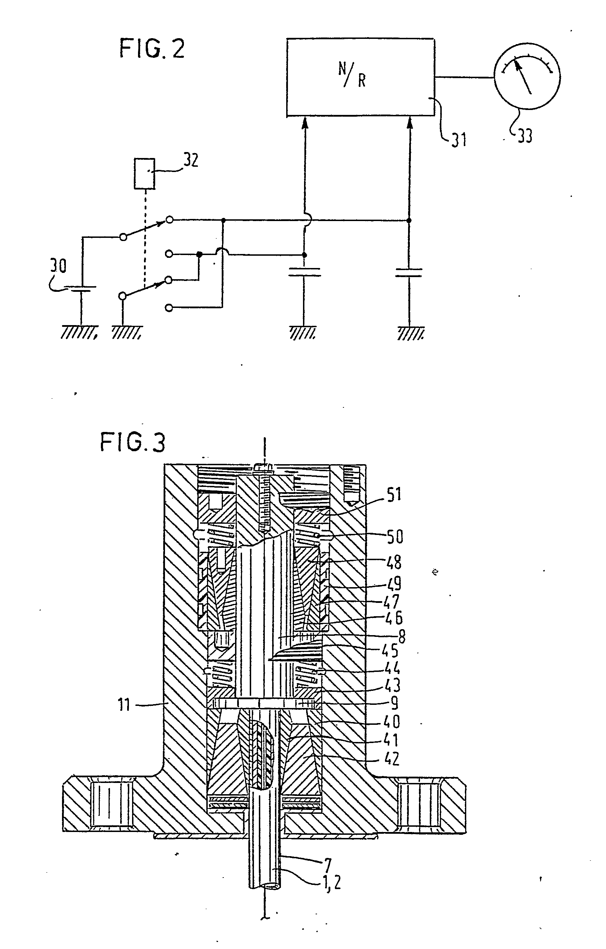

Fig. 2 shows a diagram of a potential connection of the reference capacity R and the level measuring capacity N with a voltage source 30 and an electronic arithmetic unit 31.

For this purpose each capacity has to be connected alternately through an oscillator 32 to the voltage source 30 and to earth so that each time either one or the other capacity will be alive or be discharged respectively. The oscillator 32 may have a frequency of 20.000 Hz.

Dependent upon the dielectric constant of the capacity it will require a given time for obtaining the maximum charge, said time being a parameter which is applied to the electronic arithmetic unit 31. By dividing each time the value of the level measuring section by the measuring value of the reference measuring section, an output signal is obtained which can be applied to the read unit 33 for optical display, which is determinative of the virtual level of admission in the vessel or recipient 22 irrespective of the nature and properties of the flowing substance in said vessel.

Fig. 3 shows a seal in a different embodiment between the probe 1, 2 the surrounding coating 7 and the housing 11. Also in this case the probe is fastened on the top side to an enevelope 8 having an annular shoulder 9 bearing on two annular filling bodies 40 and 41 of synthetic resin. Between the filling bodies 40 and 41 is arranged a third filling body 42 and the wedge-shape of the filling bodies is such that the ring composed by them has a cylindrical inner and outer face which bears on the one hand on the cylindrical inner wall of the widened bore of the housing 11 and on the other hand on the cylindrical outer wall of the probe 1, 2.

Through a ring 43 the shoulder is loaded by a first set of helical springs 22 subjected to stress by a nut 45 screwed into an inner screwthread of the housing 11.

A second seal is obtained in a similar manner by annular filling bodies 46, 47, and 48 which bear on the outer wall of the envelope 8 and the inner wall of a flexible sleeve 49 arranged in the bore.

The filling bodies 46, 47, and 48 are pressed home through compression spring 50 by means of a nut 51 screwed into a second screwthreaded part of the housing 11.

Such a seal is particularly suitable for storing heavy chemical substances in the recipient at high pressures up to 250 bar, at high temperatures up to 220°C, whilst the length of the electrodes may be 4 metres in stirred vessels and 5 metres in non-stirred vessels, the probe having a diameter of 24 mm.

## Claims

1. A device for measuring the level of flowable substances, for example fluids, in a recipient (22), the device comprising a capacitive probe (1, 2) connected to an electric processing circuit (18) and inserted into the recipient (22), said probe (1, 2) being intimately enveloped in an insulating synthetic resin coating (7) and its top end being inserted into a bore of a housing (11) to be connected with the recipient (22), an annular seal being formed by at least one annular filling body (12, 46—48) arranged between the bore and the coating of the probe, characterized in that said probe consists of an upper (1) and lower (2) relatively insulated measuring pipe sections, both being enveloped by said insulating coating (7), and in that resilient pressing means (15, 50) are provided near the top end of said upper pipe section (1) to impose an axial load on the or each annular body (12, 46—48).

2. A device as claimed in claim 1, characterized in that the or each annular body (12, 46—48) has a wedge-shaped longitudinal sectional area, its apex having an angle smaller than 30°.

3. A device as claimed in claims 1 or 2, characterized in that the or each annular body (12, 46—48) is made from synthetic resin.

## Patentansprüche

1. Einrichtung zum Messen des Niveaus von fließfähigen Substanzen, beispielsweise Flüssigkeiten, in einem Behälter (22), bestehend aus einer mit einem elektrischen Verarbeitungsschaltkreis (18) verbundenen und in den Behälter (22) eingepaßten kapazitiven Sonde (1, 2), wobei die Sonde (1, 2) eng in eine isolierende Syntheseharzdeckschicht (7) eingehüllt und ihr oberes Ende zum Verbinden mit dem Behälter (22) in eine Bohrung eines Gehäuses (11) eingepaßt ist, wobei eine ringförmige Dichtung durch mindestens einen ringförmigen Füllkörper (12, 46—48) gebildet ist, der zwischen der Bohrung und der Deckschicht der Sonde angeordnet ist, dadurch gekennzeichnet, daß die Sonde aus einem oberen (1) und einem unteren (2) relativ isolierten Meßrohrabschnitt besteht, die beide von der isolierenden Deckschicht (7) umhüllt sind, und daß elastische Preßmittel (15, 50) in der Nähe des oberen Endes des oberen Rohrabschnitts (1) vorgesehen sind, um dem bzw. den ringförmigen Körpern (12, 46—48) eine axiale Last aufzuerlegen.

2. Einrichtung nach Anspruch 1, dadurch gekennzeichnet, daß der bzw. die ringförmigen Körper (12, 46—48) einen keilförmigen Längsquerschnitt haben, wobei die Spitze einen Winkel von weniger als 30° einschließt.

3. Einrichtung nach Anspruch 1 oder 2, dadurch gekennzeichnet, daß der bzw. die ringförmigen Körper (12, 46—48) aus Syntheseharz hergestellt sind.

**Revendications**

1. Dispositif de mesure du niveau de matières pouvant s'écouler, par exemple des fluides dans une récipient (22), le dispositif, comprenant une sonde capacitive (1, 2) reliée à un circuit de traitement électrique (18) et introduite dans le récipient (22), ladite sonde (1, 2) étant recouverte d'un revêtement (7), de résine synthétique isolante et son extrémité supérieure étant introduite dans un trou d'un logement (11) devant être relié avec le récipient (22), un joint d'étanchéité annulaire étant constitué par au moins un corps de remplissage annulaire (12, 46, 48) agencé entre le trou et le revêtement de la sonde, caractérisé en ce que ladite sonde est constituée de sections de tuyau de mesure relativement isolées supérieure (1) et inférieure (2), les deux étant recouvertes par ledit revêtement isolant (7) et en ce que des moyens de pression élastiques (15, 50) sont prévus à proximité de l'extrémité supérieure de ladite section de tuyau supérieure (1) pour imposer une charge axiale sur le ou chaque corps annulaire (12, 46, 48).

2. Dispositif selon la revendication 1, caractérisé en ce que le ou chaque corps annulaire (12, 46, 48) à une zone de section longitudinale en forme de coin, sa pointe ayant un angle inférieur à 30°.

3. Dispositif selon les revendications 1 ou 2, caractérisé en ce que le ou chaque corps annulaire (12, 46, 48) est fabriqué en résine synthétique.

FIG.1

FIG. 2

N/R

31

32

30

33

FIG. 3

51
50
48
49
47
46
8
45
44
43
9
40
41
42

11

7
1,2